# EUROPEAN PATENT SPECIFICATION

(11) **EP 4 293 061 B1**
(45) Date of publication and mention of the grant of the patent: **03.09.2025**
(21) Application number: 22752703.3
(22) Date of filing: 04.02.2022
(51) Int. Cl.: C08G 18/10, C08G 18/42, C08G 63/02, C08G 18/75, C08G 18/76, C08G 63/12

(54) **POLYESTER POLYOL, URETHANE PREPOLYMER AND POLYURETHANE**
POLYESTERPOLYOL, URETHANPRÄPOLYMER UND POLYURETHAN
POLYESTER POLYOL, PRÉPOLYMÈRE D'URÉTHANE ET POLYURÉTHANE

(30) Priority: 10.02.2021 JP 2021020017
(43) Date of publication of application: 20.12.2023
(73) Proprietor: Kuraray Co., Ltd., Kurashiki-shi, Okayama 710-0801 (JP)
(72) Inventor: OOGUMA, Takashi, Kurashiki-shi, Okayama 710-0801 (JP); TSURUTA, Takuo, Kurashiki-shi, Okayama 710-0801 (JP); FUJI, Junichi, Kurashiki-shi, Okayama 710-0801 (JP)
(74) Representative: D Young & Co LLP
(86) International application number: PCT/JP2022/004518
(87) International publication number: WO 2022/172879

(56) References cited:
- JP-A- 2018 502 059
- JP-A- H0 931 173
- JP-A- H0 931 388
- US-A- 4 897 431
- US-A- 5 606 005
- US-A1- 2011 190 406

## Description

### Technical Field

The present invention relates to a polyester polyol having excellent hydrolysis resistance and capable of suppressing the viscosity thereof to a low level when used in a prepolymer. The present invention also relates to a urethane prepolymer and a polyurethane using the polyester polyol. The invention is set out in the appended set of claims.

### Background Art

Conventionally, as a polyol component used as a raw material for a coating material, an adhesive, a foam, a polyurethane, a polyester polyol having a hydroxy group at a molecular terminal has been used. However, since the polyester polyol is inferior in hydrolysis resistance, there has been a problem that the surface of a product using the polyester polyol becomes sticky or cracks in a relatively short period of time.

Examples of a method for solving this problem include a method in which a glycol having a large number of carbon atoms and a dicarboxylic acid having a large number of carbon atoms are used to reduce the concentration of ester groups in the polyester polyol.

However, the polyester polyol obtained by this method has a high crystallization tendency and tends to be a liquid or a solid having a high viscosity, so that there is a problem that the workability is lowered. In addition, there is also a problem that bending resistance, flexibility, low-temperature adhesiveness, are deteriorated when used in a low-temperature atmosphere of about -20°C.

As a method for solving the above-described problems and achieving both viscosity and hydrolysis resistance, a method of introducing a branched structure into a molecule is exemplified. Specifically, PTL 1 proposes a polyester polyol using 2-methyl-1,8-octanediol and 1,9-nonanediol as diol components. Further, PTL 2 proposes a polyester polyol using 3-methylpentanedioic acid having a branched structure.

### Citation List

### Patent Literature

PTL 1: JP S63-182330 A
PTL 2: JP S60-26018 A
PTL 3: US 4,897,431

### Summary of Invention

### Technical Problem

The polyester polyols described in PTL 1 and PTL 2 are excellent in hydrolysis resistance, but the viscosity of a urethane prepolymer using the polyester polyol is not sufficiently low, and thus further improvement has been desired. PTL 3 discloses a process for preparing primarily closed cell rigid foams containing urethane groups or urethane and isocyanurate groups.

The present invention has been made in view of the above-described conventional problems, and an object of the present invention is to provide a polyester polyol having excellent hydrolysis resistance and capable of suppressing viscosity to a low level when used in a urethane prepolymer, and a urethane prepolymer and a polyurethane using the polyester polyol.

### Solution to Problem

As a result of various studies on the improvement of the hydrolysis resistance of a polyester polyol and the lowering of the viscosity of a urethane prepolymer using this polyester polyol, the present inventors have found that the viscosity of a urethane prepolymer using a polyester polyol is reduced while maintaining the hydrolysis resistance of the polyester polyol by employing an unprecedented formulation in which a dicarboxylic acid as a main raw material, specifically, 3-methylpentanedioic acid (3-methylglutaric acid) having a branched chain and a specific dicarboxylic acid are used in combination, and as a result of further studies, the present invention was completed.

That is, the present invention provides the following [1] to [5].
[1] A polyester polyol obtained by reacting a dicarboxylic acid component (A) with a diol component (B), wherein the dicarboxylic acid component (A) contains a dicarboxylic acid (a1) represented by the following general formula (I) and a dicarboxylic acid (a2) represented by the following general formula (II), wherein the content of the dicarboxylic acid (a1) is 97.00 to 99.98% by mass in 100% by mass of the total amount of the dicarboxylic acid component (A) and the content of the dicarboxylic acid (a2) is 0.02 to 3.00% by mass in 100% by mass of the total amount of the dicarboxylic acid component (A): 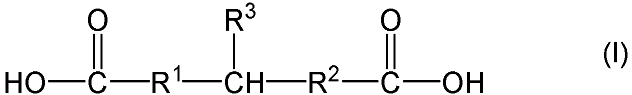 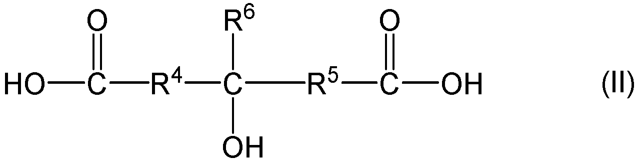 and wherein R¹, R², R⁴, and R⁵ each independently represent a divalent hydrocarbon group having 1 to 3 carbon atoms, and R³ and R⁶ each independently represent a monovalent hydrocarbon group having 1 to 3 carbon atoms.
[2] The polyester polyol as set forth in [1], wherein a content of the dicarboxylic acid component (a2) is 3.00 parts by mass or less with respect to 100 parts by mass of the dicarboxylic acid component (a1).
[3] The polyester polyol as set forth in [1] or [2], wherein R¹, R², R⁴, and R⁵ in the general formulas (I) and (II) are each a methylene group.
[4] A urethane prepolymer obtained by reacting the polyester polyol as set forth in any of [1] to [3] with a polyisocyanate compound.
[5] A polyurethane using the polyester polyol as set forth in any of [1] to [3] or the urethane prepolymer as set forth in [4].

### Advantageous Effects of Invention

According to the present invention, it is possible to provide a polyester polyol having excellent hydrolysis resistance and capable of suppressing the viscosity to a low level when used in a urethane prepolymer, and a urethane prepolymer and a polyurethane using the polyester polyol.

### Brief Description of Drawings

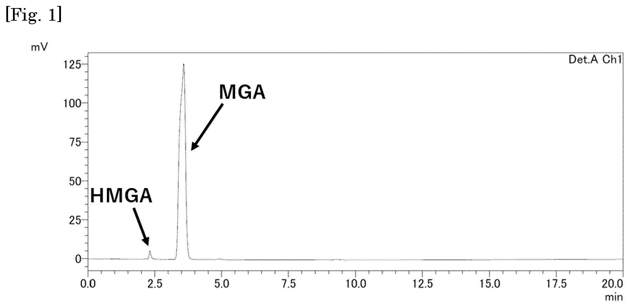

Fig. 1 is a graph showing an area ratio of the contents of dicarboxylic acids (a1) and (a2) contained in the dicarboxylic acid component (A) obtained in Production Example 1.

### Description of Embodiments

### [Polyester Polyol]

The polyester polyol of the present invention is a polyester polyol obtained by reacting a dicarboxylic acid component (A) with a diol component (B), wherein the dicarboxylic acid component (A) contains a dicarboxylic acid (a1) represented by the following general formula (I) and a dicarboxylic acid (a2) represented by the following general formula (II), and a content of the dicarboxylic acid (a2) is 0.02 to 3.00% by mass in 100% by mass of the total amount of the dicarboxylic acid component (A): 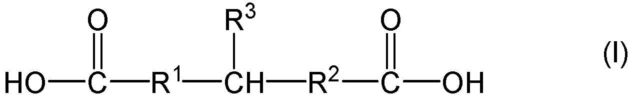 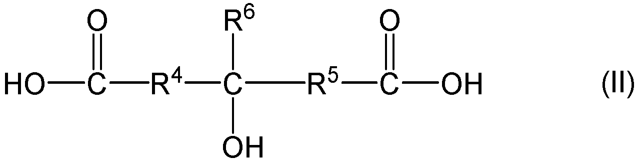 wherein R¹, R², R⁴, and R⁵ each independently represent a divalent hydrocarbon group having 1 to 3 carbon atoms, and R³ and R⁶ each independently represent a monovalent hydrocarbon group having 1 to 3 carbon atoms.

The present invention is characterized in that the dicarboxylic acid (a1) represented by the general formula (I) and the dicarboxylic acid (a2) represented by the general formula (II) are used in combination as the dicarboxylic acid component (A) as described above. In the production of a general polyester polyol, it is common to use a highly purified dicarboxylic acid as a dicarboxylic acid component, but the present inventors tried an unusual blending in which the dicarboxylic acid (a1) and a specific amount of the dicarboxylic acid (a2) are used in combination. As a result, it has been found that the viscosity of a urethane prepolymer using the obtained polyester polyol is further reduced while maintaining the hydrolysis resistance of the polyester polyol at a high level, and the present invention has been completed. Hereinafter, the present invention will be described in detail.

### <Dicarboxylic Acid Component (A)>

In the present invention, the dicarboxylic acid component (A) contains a dicarboxylic acid (a1) represented by the general formula (I) and a dicarboxylic acid (a2) represented by the general formula (II).

### [Dicarboxylic Acid (a1)]

The dicarboxylic acid (a1) is a dicarboxylic acid represented by the following general formula (I).

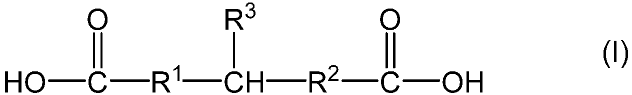

In the general formula (I), R¹ and R² each independently represent a divalent hydrocarbon group having 1 to 3 carbon atoms. The hydrocarbon groups represented by R¹ and R² may be different from each other, but from the viewpoint of ease of production, it is preferable that R¹ and R² are the same hydrocarbon group. As specific R¹ and R², a divalent hydrocarbon group having 1 to 2 carbon atoms is preferable, and a divalent hydrocarbon group having 1 carbon atom is more preferable.

Incidentally, R¹ and R² may be linear or branched, and may have a substituent such as a halogen atom and a hydroxy group.

On the other hand, R³ in the general formula (I) represents a monovalent hydrocarbon group having 1 to 3 carbon atoms, and specifically, a monovalent hydrocarbon group having 1 to 2 carbon atoms is preferable, and a methyl group which is a monovalent hydrocarbon group having 1 carbon atom is more preferable.

Incidentally, R³ may be linear or branched, and may have a substituent such as a halogen atom and a hydroxy group.

Among these, as the dicarboxylic acid (a1) represented by the general formula (I), 3-methylglutaric acid in which R¹ and R² are each a methylene group and R³ is a methyl group is preferable.

3-Methylglutaric acid can be produced, for example, by the method described in JP H07-258148 A, and specifically, can be produced by oxidizing one compound selected from the group consisting of β-methyl-δ-valerolactone, 2-hydroxy-4-methyltetrahydropyran, and 3-methyl-1,5-pentanediol with oxygen in the presence of an oxidation catalyst and water.

The content of the dicarboxylic acid (a1) in 100% by mass of the total amount of the dicarboxylic acid component (A) is 97.00 to 99.98% by mass. When the content of the dicarboxylic acid (a1) is 97.00% by mass or more, various physical properties of a product using the polyester polyol as a raw material can be improved. On the other hand, when the content is 99.98% by mass or less, the viscosity of the prepolymer using the polyester polyol can be reduced.

From these viewpoints, the content of the dicarboxylic acid (a1) in 100% by mass of the total amount of the dicarboxylic acid component (A) is preferably 97.50 to 99.97% by mass, more preferably 98.00 to 99.96% by mass, and still more preferably 98.50 to 99.95% by mass.

### [Dicarboxylic Acid (a2)]

The dicarboxylic acid (a2) is a dicarboxylic acid represented by the following general formula (II).

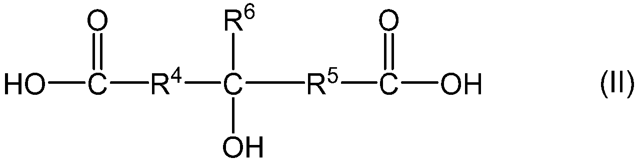

In the general formula (II), R⁴ and R⁵ each independently represent a divalent hydrocarbon group having 1 to 3 carbon atoms. The hydrocarbon groups represented by R⁴ and R⁵ may be different from each other, but from the viewpoint of ease of production, it is preferable that R⁴ and R⁵ are the same hydrocarbon group. As specific R⁴ and R⁵, a divalent hydrocarbon group having 1 to 2 carbon atoms is preferable, and a divalent hydrocarbon group having 1 carbon atom is more preferable.

Incidentally, R⁴ and R⁵ may be linear or branched, and may have a substituent such as a halogen atom and a hydroxy group.

On the other hand, R⁶ in the general formula (II) represents a monovalent hydrocarbon group having 1 to 3 carbon atoms, and specifically, a monovalent hydrocarbon group having 1 to 2 carbon atoms is preferable, and a methyl group which is a monovalent hydrocarbon group having 1 carbon atom is more preferable.

Incidentally, R⁶ may be linear or branched, and may have a substituent such as a halogen atom and a hydroxy group.

Among these, as the dicarboxylic acid (a2) represented by the general formula (II), 3-hydroxy-3-methylglutaric acid in which R⁴ and R⁵ are each a methylene group and R⁶ is a methyl group is preferable.

Examples of the method for producing 3-hydroxy-3-methylglutaric acid include a method described in, for example, JP S60-190735 A.

In the present invention, from the viewpoint of suppressing the viscosity of the urethane prepolymer while maintaining the hydrolysis resistance of the polyester polyol, it is preferable that the dicarboxylic acid (a1) is 3-methylglutaric acid and the dicarboxylic acid (a2) is 3-hydroxy-3-methylglutaric acid. In a case where the dicarboxylic acid (a1) and the dicarboxylic acid (a2) are the combination described above, a mixture of the dicarboxylic acid (a1) and the dicarboxylic acid (a2) is obtained by producing the dicarboxylic acid (a1) using the dicarboxylic acid (a2) as a raw material (for example, producing 3-methylglutaric acid by dehydration hydrogenation of 3-hydroxy-3-methylglutaric acid), and by purifying the mixture, it becomes possible to adjust the amount ratio between the dicarboxylic acid (a1) and the dicarboxylic acid (a2), and thus the preparation of the dicarboxylic acid component (A) becomes easy.

The content of the dicarboxylic acid (a2) in 100% by mass of the total amount of the dicarboxylic acid component (A) is 0.02 to 3.00% by mass. When the content of the dicarboxylic acid (a2) is less than 0.02% by mass, the viscosity of the urethane prepolymer obtained by reacting the polyester polyol with the polyisocyanate compound cannot be reduced. On the other hand, when the content exceeds 3.00% by mass, yellowing occurs in the obtained polyester polyol.

From these viewpoints, the content of the dicarboxylic acid (a2) in 100% by mass of the total amount of the dicarboxylic acid component (A) is preferably 0.03 to 2.50% by mass, more preferably 0.04 to 2.00% by mass, and still more preferably 0.05 to 1.50% by mass.

### [Other Dicarboxylic Acids]

The dicarboxylic acid component (A) used in the present invention may contain another dicarboxylic acid in addition to the dicarboxylic acid (a1) and the dicarboxylic acid (a2).

The other dicarboxylic acid is not particularly limited, but a low-molecular dicarboxylic acid is more preferable.

Examples of the low-molecular dicarboxylic acid include aliphatic dicarboxylic acids such as succinic acid, methylsuccinic acid, glutaric acid, adipic acid, pimelic acid, suberic acid, azelaic acid, and sebacic acid; alicyclic dicarboxylic acids such as cyclohexanedicarboxylic acid; and aromatic dicarboxylic acids such as phthalic acid, terephthalic acid, isophthalic acid, and naphthalenedicarboxylic acid. These dicarboxylic acids may be used alone or may be used as a mixture of two or more of them.

In the present invention, a trifunctional or higher polycarboxylic acid may be used, and when the trifunctional or higher polycarboxylic acid is used, it is treated as the dicarboxylic acid component (A).

The content of the other dicarboxylic acid contained in 100% by mass of the total amount of the dicarboxylic acid component (A) is preferably 20.0% by mass or less, more preferably 10.0% by mass or less, and still more preferably 5.0% by mass or less. When the content of the other dicarboxylic acid is equal to or less than the upper limit value, the effects based on the dicarboxylic acid component (a1) are more easily obtained.

In the present invention, in both cases where the other dicarboxylic acid is contained and cases where the other dicarboxylic acid is not contained, the content of the dicarboxylic acid component (a2) with respect to 100 parts by mass of the dicarboxylic acid component (a1) is preferably 3.00 parts by mass or less, and more preferably 2.00 parts by mass or less. As the content of the dicarboxylic acid component (a2) is closer to the upper limit value, the effects based on the dicarboxylic acid component (a2) are more easily obtained.

### <Diol Component (B)>

Examples of the diol component (B) used in the present invention include aliphatic diols such as ethylene glycol, diethylene glycol, triethylene glycol, propylene glycol, 1,3-propanediol, 2-methyl-1,3-propanediol, 1,3-butanediol, 1,4-butanediol, 2-methyl-1,4-butanediol, 1,5-pentanediol, 3-methyl-1,5-pentanediol, 1,6-hexanediol, 2-methyl-1,8-octanediol, 2,7-dimethyl-1,8-octanediol, 1,9-nonanediol, 2-methyl-1,9-nonanediol, 2,8-dimethyl-1,9-nonanediol, 1,10-decanediol, 2,2-diethyl-1,3-propanediol, and 2-butyl-2-ethyl-1,3-propanediol; and alicyclic diols such as 1,4-cyclohexanediol, cyclohexanedimethanol, and 3(or 4),8(or 9)-dihydroxytricyclo[5.2.1.02,6]decane, and among these, aliphatic diols are preferred. These diols may be used alone or may be used as a mixture of two or more of them.

The polyester polyol of the present invention may contain an aromatic ring-containing diol such as 1,4-bis(B-hydroxyethoxy)benzene or bis(β-hydroxyethoxy)terephthalate as long as the gist of the invention is not impaired. In addition, the polyester polyol may contain a trifunctional or higher polyol such as trimethylolpropane, trimethylolethane, glycerin, 1,2,6-hexanetriol, or 1,2,4-butanetriol.

### <Number Average Molecular Weight of Polyester Polyol>

The number average molecular weight of the polyester polyol of the present invention is preferably 300 to 30,000. When the number average molecular weight of the polyester polyol is 300 or more, the mechanical properties such as strength of the polyurethane produced using the polyester polyol are improved. On the other hand, when the number average molecular weight of the polyester polyol is 30,000 or less, the low-temperature properties and flexibility of the polyurethane produced using the polyester polyol are improved. From these viewpoints, the number average molecular weight of the polyester polyol is more preferably 700 to 20,000, and still more preferably 1,000 to 10,000.

In the present invention, the number average molecular weight of the polyester polyol refers to a value obtained by the method described in Examples.

### <Number of Hydroxy Groups in One Molecule of Polyester Polyol>

In the present invention, the number of hydroxy groups in one molecule of the polyester polyol varies depending on the application, but is preferably 2 or more per molecule. When the number is in the range of 2 to 3, the polyester can be used in most applications, and has versatility.

### <Method for Producing Polyester Polyol>

The method for producing the polyester polyol of the present invention is not particularly limited, and the polyester polyol can be produced by a known polycondensation method.

For example, it can be produced by charging a dicarboxylic acid component (A) containing the dicarboxylic acid (a1) and the dicarboxylic acid (a2) and the diol component (B) at a predetermined ratio, performing an esterification or a transesterification reaction, and further subjecting the obtained reaction product to a polycondensation reaction in the presence of a polycondensation catalyst at a high temperature and in a vacuum.

In addition, as the polycondensation catalyst used for producing the polyester polyol, known catalysts can be used, and examples thereof include titanium compounds such as tetramethoxy titanium, tetraethoxy titanium, tetra-n-propoxy titanium, tetraisopropoxy titanium, and tetrabutoxy titanium; tin compounds such as di-n-butyltin oxide, di-n-butyltin dilaurate, and dibutyltin diacetate; and a combination of an acetate salt such as magnesium, calcium, or zinc and antimony oxide or the above-described titanium compound.

The amount of these polycondensation catalysts is preferably 5 to 500 ppm with respect to the total amount of the dicarboxylic acid component (A) and the diol component (B).

### [Urethane Prepolymer and Polyurethane]

The urethane prepolymer of the present invention is obtained by reacting the polyester polyol of the present invention with a polyisocyanate compound, and the viscosity can be suppressed to be lower than that of a urethane prepolymer produced from the same raw material. Therefore, the degree of freedom of subsequent blending is improved, and for example, the dispersibility of a pigment can be improved. Further, by suppressing the viscosity of the urethane prepolymer to a low level, the workability is improved in the applications of a coating material, an adhesive, and a foam.

Furthermore, the polyurethane of the present invention is obtained by using the polyester polyol or the urethane prepolymer of the present invention, and is excellent in hydrolysis resistance due to the characteristics of the polyester polyol.

### <Polyisocyanate Compound>

The polyisocyanate compound used in the present invention is not particularly limited as long as it has two or more isocyanate groups in one molecule, and examples thereof include aromatic polyisocyanates such as tolylene diisocyanate, diphenylmethane diisocyanate, 1,4-phenylene diisocyanate, polymethylene polyphenylene polyisocyanate, xylylene diisocyanate, tetramethylxylylene diisocyanate, tolidine diisocyanate, 1,5-naphthalene diisocyanate, and triphenylmethane triisocyanate; aliphatic polyisocyanates such as hexamethylene diisocyanate, trimethylhexamethylene diisocyanate, lysine diisocyanate, and norbornane diisocyanate methyl; alicyclic polyisocyanates such as transcyclohexane-1,4-diisocyanate, isophorone diisocyanate, bis(isocyanatemethyl)cyclohexane, and dicyclohexylmethane diisocyanate; and carbodiimide-modified isocyanate compounds and isocyanurate-modified isocyanate compounds of these isocyanate compounds. These polyisocyanate compounds may be used alone or may be used in combination of two or more.

Among these polyisocyanate compounds, an aromatic polyisocyanate and an alicyclic polyisocyanate are preferable from the viewpoint of improving various physical properties such as strength of the obtained polyurethane, and tolylene diisocyanate (TDI) and isophorone diisocyanate (IPDI) which are liquid are more preferable from the viewpoint of lowering viscosity.

### <Viscosity of Urethane Prepolymer>

The urethane prepolymer of the present invention is obtained by reacting the polyester polyol of the present invention with a polyisocyanate compound, and the viscosity can be suppressed to be lower than that of a urethane prepolymer produced from the same raw material. To be specific, the viscosity at 60°C is preferably 4,000 mPa ·s or less, more preferably 3,500 mPa ·s or less, and still more preferably 1,500 mPa ·s or less. When the viscosity at 60°C of the urethane prepolymer is equal to or less than the upper limit value, the workability is improved in the applications of a coating material, an adhesive, and a foam.

In addition, the viscosity at 60°C of the urethane prepolymer can be measured by a method described in Examples.

### <Method for Producing Urethane Prepolymer>

The urethane prepolymer can be produced by mixing the polyester polyol of the present invention, the polyisocyanate compound, and optional components such as a plasticizer used as necessary.

The mixing apparatus is not particularly limited, and examples thereof include a roll, a kneader, a pressure kneader, a Banbury mixer, a horizontal mixer (for example, Loedige Mixer), a vertical mixer (for example, planetary mixer), an extruder, and a universal stirrer.

As the optional component, for example, additives such as a plasticizer, a crosslinking agent, a filler, a crosslinking accelerator, a crosslinking aid, a tackifier, an aging inhibitor, a foaming agent, a processing aid, an adhesiveness imparting agent, an inorganic filler, an organic filler, a crystal nucleation agent, a heat-resistant stabilizer, a weatherproof stabilizer, an antistatic agent, a colorant, a lubricant, a flame retardant, a flame retardant aid (for example, antimony oxide), a blooming inhibitor, a release agent, a viscosity improver, an antioxidant, a conductive agent, may be contained.

The content of the optional component in the urethane prepolymer is not particularly limited, but is preferably 50% by mass or less, more preferably 20% by mass or less, and still more preferably 5% by mass or less.

### <Method for Producing Polyurethane>

The method for producing the polyurethane of the present invention is not particularly limited, but the polyurethane is preferably obtained by polymerizing each of the above-described raw materials by a urethanization reaction using a known prepolymer method or one shot method.

More specifically, examples of the method include a method in which the above-mentioned components are blended at a predetermined ratio in the substantial absence of a solvent and melt-polymerized while melt-mixing using a single- or multi-screw extruder to produce a polyurethane, and a method in which a polyurethane is produced by polymerization by a prepolymer method in the presence of a solvent. The melt-polymerization may be continuously performed.

The obtained polyurethane may be, for example, pelletized and then molded into a sheet-shaped molded body by various molding methods such as an extrusion molding method, an injection molding method, a blow molding method, and a calender molding method.

### Examples

Hereinafter, the present invention will be specifically described with reference to Examples, but the present invention is not limited to such Examples.

In the Examples and Comparative Examples, the contents of the dicarboxylic acids (a1) and (a2) in the total amount of the dicarboxylic acid component (A) and the number average molecular weight of the polyester polyol were measured by the following methods.

In addition, the evaluation of the hydrolysis resistance of the polyester polyol and the evaluation of the viscosity of the prepolymer were carried out by the following methods.

### <Contents of Dicarboxylic acids (a1) and (a2) in Total Amount of Dicarboxylic Acid Component (A)>

The contents of the dicarboxylic acids (a1) and (a2) in the total amount of the dicarboxylic acid component (A) were determined from the following equations using the peak areas (%) of the dicarboxylic acids (a1) and (a2) obtained by the following LC measurement. Content of dicarboxylic acid (a1) (% by mass) = Peak area (%) of dicarboxylic acid (a1) × 100 / (Peak area (%) of dicarboxylic acid (a1) + Peak area (%) of dicarboxylic acid (a2)) Content of dicarboxylic acid (a2) (% by mass) = Peak area (%) of dicarboxylic acid (a2) × 100 / (Peak area (%) of dicarboxylic acid (a1) + Peak area (%) of dicarboxylic acid (a2))

An area value measured under the following conditions using HPLC Prominence manufactured by Shimadzu Corporation was used.
Column: L-columnODS (manufactured by Chemicals Evaluation and
Research Institute, Japan (CERI), 4.6 × 150 mm)
Flow rate: 1.0 mL/min
Injection volume: 5 µL (sample concentration: 12 mg/mL, solvent: acetonitrile)
Detector: UV (220 nm)
Column temperature: 40°C
Eluent A: 0.1% by mass phosphoric acid aqueous solution
Eluent B: acetonitrile
Gradient: conditions shown in Table 1 below
Retention time (HMGA): 2.3 min
Retention time (MGA): 3.6 min

**Table 1**

| Time (min) | Eluent A (% by volume) | Eluent B (% by volume) |
|---|---|---|
| 0 | 85 | 15 |
| 5 | 85 | 15 |
| 45 | 20 | 80 |

### <Number Average Molecular Weight of Polyester Polyol>

The number average molecular weight was determined by calculation based on the hydroxyl value of the polyester polyol obtained in Examples and Comparative Examples. The hydroxyl value was measured by a phthalation method described in JIS K 1557-1.

### <Evaluation of Hydrolysis Resistance of Polyester Polyol>

0.5 g of the polyester polyol obtained in each of Examples and Comparative Examples was left in 10 mL of hot water at 100°C for 7 days. Next, the acid values of the water and the polyester polyol were measured in accordance with JIS K 1557-5:2007, and the sum of the acid values was defined as an acidic value and used as an indicator of hydrolysis resistance. The smaller the acidic value, the better the hydrolysis resistance.

### <Viscosity of Urethane Prepolymer>

The viscosity of the urethane prepolymer obtained in each of Examples and Comparative Examples at 60°C was measured by a Brookfield B Type Viscometer LVDV-II.

### [Production Example]

### <Production Example 1: Synthesis of 3-methylglutaric acid>

3-Hydroxy-3-methylglutaric acid was produced according to the following method, and then 4-methyl-3,6-dihydro-2H-pyran-2,6-dione was produced using this as a raw material. Next, 3-methylglutaric acid was produced using this as a raw material.

First, 3-hydroxy-3-methylglutaric acid was produced according to the method described in JP S60-190735 A. 300 g of the obtained 3-hydroxy-3-methylglutaric acid was charged into a three-necked flask equipped with a condenser, 600 mL of acetyl chloride was added thereto, and the mixture was heated to 60°C to perform an acetylation reaction for 5 hours. After cooling, the recovered reaction product was filtered off and washed with xylene. Thereafter, the reaction product was again charged into a three-necked flask, 600 mL of xylene was added thereto, and the mixture was heated to 150°C, and subjected to a deacetylation reaction under reflux for 5 hours to produce 4-methyl-3,6-dihydro-2H-pyran-2,6-dione. The reaction product was separated and obtained by crystallization by cooling the reaction solution.

Next, 200 g of the obtained 4-methyl-3,6-dihydro-2H-pyran-2,6-dione was dissolved in 500 mL of ethanol, and the resulting solution was charged into a pressure-resistant container equipped with a stirrer, and 10% Pd/C (2g), which is commercially available, was added thereto, and nitrogen-substitution was repeated three times. Next, the mixture was hydrogenated for 12 hours under a pressure of 0.3 MPa using hydrogen.

After the catalyst was removed from the reaction solution by filtration, the solvent was removed with a rotary evaporator to obtain 3-methylglutaric anhydride.

Further, 128 g of the obtained 3-methylglutaric anhydride was charged into a three-necked flask equipped with a condenser together with 18 g of water and 500 mL of toluene. The mixture was heated at 70°C and stirred for 5 hours to obtain 3-methylglutaric acid by hydrolysis in the solvent. The obtained reaction product was separated and obtained by crystallization by cooling the reaction solution. The content of 3-hydroxy-3-methylglutaric acid [dicarboxylic acid (a2)] in the obtained dicarboxylic acid component (A) was 1.28% by mass.

The results of LC measurement performed on the obtained dicarboxylic acid component (A) are shown in Fig. 1. In Fig. 1, HMGA represents 3-hydroxy-3-methylglutaric acid (dicarboxylic acid (a2)), and MGA represents 3-methylglutaric acid (dicarboxylic acid (a1)).

### [Examples and Comparative Examples]

### <Example 1>

### [Synthesis of Polyester Polyol]

As the dicarboxylic acid component (A) [1 moll, 146 g of 3-methylglutaric acid obtained in Production Example 1 was prepared. In addition, the content of 3-methylglutaric acid [dicarboxylic acid (a1)] in the dicarboxylic acid component (A) was 98.72% by mass, and the content of 3-hydroxy-3-methylglutaric acid [dicarboxylic acid (a2)] was 1.28% by mass.

Further, 177g (1.5 mol) of 3-methyl-1,5-pentanediol was prepared as the diol component (B), and these were charged into a reactor. Next, the mixture was heated to 200°C under normal pressure in a nitrogen atmosphere, and an esterification reaction was carried out while the produced water was distilled out of the system.

When the amount of the produced water was reduced, 5 mg of tetraisopropoxy titanium was added, and the reaction was continued while reducing the pressure to 200 to 100 mmHg by a vacuum pump, thereby obtaining a polyester polyol having a hydroxyl value of 56.5 KOHmg/g, an acid value of 0.05 KOHmg/g, and a number average molecular weight of 1,986.

The hydrolysis resistance of the obtained polyester polyol was measured in accordance with the method described above. The results are shown in Table 2.

### [Synthesis of Prepolymer]

50g (0.025 mol) of the obtained polyester polyol was weighed in a three-necked flask. Next, a vacuum stirrer and a mechanical stirrer were set in the three-necked flask, and then the flask was immersed in an oil bath at 80°C, and the polyester polyol was dehydrated while reducing the pressure by a vacuum pump.

After 1 hour of dehydration, 8.77g (0.05 mol) of tolylene diisocyanate ("Coronate T-65" manufactured by Tosoh Corporation) was put into the flask under a nitrogen atmosphere, and the mixture was stirred and mixed at 80°C for 10 minutes. Thereafter, the temperature was lowered to 60°C, and stirring was continued for 2 hours under a nitrogen atmosphere.

The viscosity of the obtained urethane prepolymer was evaluated by measuring by the above-described method. The results are shown in Table 2.

### <Examples 2 to 5 and Comparative Examples 1 to 5>

Polyester polyols were produced in the same manner as in Example 1 using the dicarboxylic acid component (A) and the diol component (B) shown in Table 2, and the calculation of the number average molecular weight and the evaluation of the hydrolysis resistance were performed. The results are shown in Table 2.

In addition, the amount ratio of the dicarboxylic acid (a1) and the dicarboxylic acid (a2) in the dicarboxylic acid component (A) was adjusted by the number of times of purification described in Table 2 (specifically, the number of times of recrystallization from heated toluene).

Further, a urethane prepolymer was produced in the same manner as in Example 1 by using a polyisocyanate compound in the formulation shown in Table 2, and the viscosity was measured. The results are shown in Table 2.

The polyester polyols obtained in Examples 1 to 5 were liquids having a low viscosity at 20°C.

**Table 2**

| | | Composition of polyester polyol | | | | | Polyester polyol [p] | | Urethane prepolymer | | |
|---|---|---|---|---|---|---|---|---|---|---|---|
| | | Dicarboxylic acid component (A) | | | Diol component (B) | Number of times of purification *1) | Number average molecular weight (in terms of hydroxyl value) | Hydrlolysis resistance [mgKOH/g] | Composition | | Viscosity at 60°C [mPa ·s] |
| | | Dicarboxylic acid (a1) | Dicarboxylic acid (a2) | Content of (a2) in (A) (% by mass) | Diol | | | | Type of isocyanate [i] | p/i [molar ratio] | |
| Example | 1 | MGA | HMGA | 1.28 | MPD | 0 | 1,986 | 0.7 | TDI | 1/2 | 3,409 |
| | 2 | MGA | HMGA | 0.15 | MPD | 1 | 1,993 | 0.6 | TDI | 1/2 | 3,002 |
| | 3 | MGA | HMGA | 0.06 | MPD | 2 | 1,979 | 0.7 | TDI | 1/2 | 3,576 |
| | 4 | MGA | HMGA | 0.15 | MPD | 1 | 1,993 | 0.6 | IPDI | 1/2 | 731 |
| | 5 | MGA | HMGA | 0.15 | MPD | 1 | 1,993 | 0.6 | TDI | 1/4 | 1,114 |
| Comparative Example | 1 | MGA | HMGA | 0.01 | MPD | 3 | 1,989 | 0.6 | TDI | 1/2 | 4,542 |
| | 2 | MGA | HMGA | 0.01 | MPD | 3 | 1,989 | 0.6 | IPDI | 1/2 | 899 |
| | 3 | MGA | HMGA | 0.01 | MPD | 3 | 1,989 | 0.6 | TDI | 1/4 | 1,391 |
| | 4 | MGA | HMGA | 0.01 | BD | 3 | 2,109 | 1.5 | Not tested | | |
| | 5 | ADA | - | - | BD | - | 1,996 | 31.4 | Not tested | | |

| | | | | | | | | | | | |
|---|---|---|---|---|---|---|---|---|---|---|---|
| *1) Number of times of purification of dicarboxylic acid component (A) | | | | | | | | | | | |

In Table 2, the components are represented by the following abbreviations.
MGA: 3-methylglutaric acid
HMGA: 3-hydroxy-3-methylglutaric acid
MPD: 3-methyl-1,5-pentanediol
TDI: tolylene diisocyanate
IPDI: isophorone diisocyanate
BD: 1,4-butanediol
ADA: adipic acid

As is clear from the results shown in Table 2, the polyester polyols of Examples synthesized using the dicarboxylic acid component (A) containing both the dicarboxylic acid (a1) and the dicarboxylic acid (a2) and containing a specific amount of the dicarboxylic acid (a2) have hydrolysis resistance equivalent to that of the polyester polyol having a similar structure, and the viscosity of the urethane prepolymer can be further suppressed to a low level.

## Claims

1. A polyester polyol obtained by reacting a dicarboxylic acid component (A) with a diol component (B), wherein the dicarboxylic acid component (A) comprises a dicarboxylic acid (a1) represented by the following general formula (I) and a dicarboxylic acid (a2) represented by the following general formula (II), wherein the content of the dicarboxylic acid (a1) is 97.00 to 99.98% by mass in 100% by mass of the total amount of the dicarboxylic acid component (A) and the content of the dicarboxylic acid (a2) is 0.02 to 3.00% by mass in 100% by mass of the total amount of the dicarboxylic acid component (A): 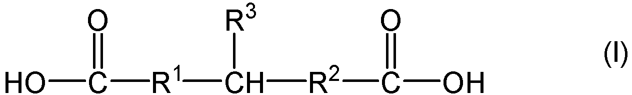 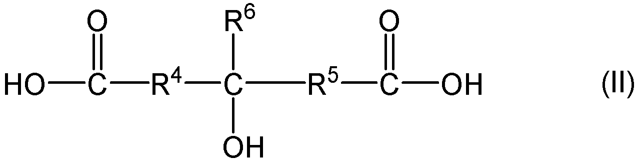 and wherein R¹, R², R⁴, and R⁵ each independently represent a divalent hydrocarbon group having 1 to 3 carbon atoms, and R³ and R⁶ each independently represent a monovalent hydrocarbon group having 1 to 3 carbon atoms.

2. The polyester polyol according to claim 1, wherein a content of the dicarboxylic acid component (a2) is 3.00 parts by mass or less with respect to 100 parts by mass of the dicarboxylic acid component (a1).

3. The polyester polyol according to claim 1 or 2, wherein R¹, R², R⁴, and R⁵ in the general formulas (I) and (II) are each a methylene group.

4. A urethane prepolymer obtained by reacting the polyester polyol according to any one of claims 1 to 3 with a polyisocyanate compound.

5. A polyurethane using the polyester polyol according to any one of claims 1 to 3 or the urethane prepolymer according to claim 4.

## Patentansprüche

1. Polyesterpolyol, erhalten durch Umsetzung einer Dicarbonsäurekomponente (A) mit einer Diolkomponente (B), wobei die Dicarbonsäurekomponente (A) eine durch die folgende allgemeine Formel (I) wiedergegebene Dicarbonsäure (a1) und eine durch die folgende allgemeine Formel (II) wiedergegebene Dicarbonsäure (a2) umfasst, wobei der Gehalt der Dicarbonsäure (a1) 97,00 bis 99,98 Massen-% in 100 Massen-% der Gesamtmenge der Dicarbonsäurekomponente (A) beträgt und der Gehalt der Dicarbonsäure (a2) 0,02 bis 3,00 Massen-% in 100 Massen-% der Gesamtmenge der Dicarbonsäurekomponente (A) beträgt: 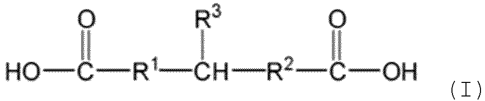 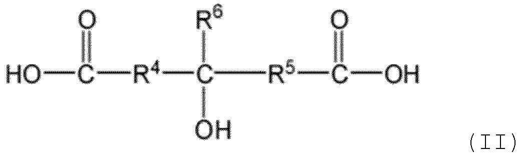 und wobei R¹, R², R⁴ und R⁵ jeweils unabhängig für eine zweiwertige Kohlenwasserstoffgruppe mit 1 bis 3 Kohlenstoffatomen stehen und R³ und R⁶ jeweils unabhängig für eine einwertige Kohlenwasserstoffgruppe mit 1 bis 3 Kohlenstoffatomen stehen.

2. Polyesterpolyol nach Anspruch 1, wobei der Gehalt der Dicarbonsäurekomponente (a2) 3,00 Massenteile oder weniger, bezogen auf 100 Massenteile der Dicarbonsäurekomponente (a1), beträgt.

3. Polyesterpolyol nach Anspruch 1 oder 2, wobei R¹, R², R⁴ und R⁵ in den allgemeinen Formeln (I) und (II) jeweils eine Methylengruppe sind.

4. Urethanprepolymer, erhalten durch Umsetzung des Polyesterpolyols nach einem der Ansprüche 1 bis 3 mit einer Polyisocyanatverbindung.

5. Polyurethan unter Verwendung des Polyesterpolyols nach einem der Ansprüche 1 bis 3 oder des Urethanprepolymers nach Anspruch 4.

## Revendications

1. Polyester polyol obtenu en faisant réagir un composant acide dicarboxylique (A) avec un composant diol (B), dans lequel le composant acide dicarboxylique (A) comprend un acide dicarboxylique (a1) représenté par la formule générale (I) suivante et un acide dicarboxylique (a2) représenté par la formule générale (II) suivante, dans lequel la teneur en acide dicarboxylique (a1) est de 97,00 à 99,98 % en masse pour 100 % en masse de la quantité totale du composant acide dicarboxylique (A) et la teneur en acide dicarboxylique (a2) est de 0,02 à 3,00 % en masse pour 100 % en masse de la quantité totale du composant acide dicarboxylique (A) : 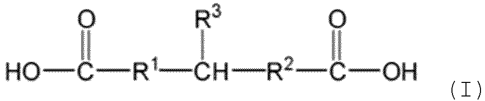 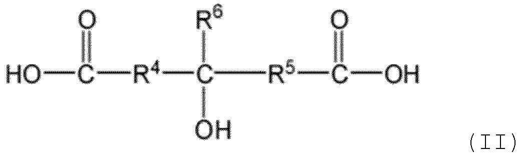 et dans lequel R¹, R², R⁴ et R⁵ représentent chacun indépendamment un groupe hydrocarboné divalent ayant 1 à 3 atomes de carbone, et R³ et R⁶ représentent chacun indépendamment un groupe hydrocarboné monovalent ayant 1 à 3 atomes de carbone.

2. Polyester polyol selon la revendication 1, dans lequel la teneur en composant acide dicarboxylique (a2) est de 3,00 parties en masse ou moins par rapport à 100 parties en masse du composant acide dicarboxylique (a1).

3. Polyester polyol selon la revendication 1 ou 2, dans lequel R¹, R², R⁴ et R⁵ dans les formules générales (I) et (II) sont chacun un groupe méthylène.

4. Prépolymère d'uréthane obtenu en faisant réagir le polyester polyol selon l'une quelconque des revendications 1 à 3 avec un composé polyisocyanate.

5. Polyuréthane utilisant le polyester polyol selon l'une quelconque des revendications 1 à 3 ou le prépolymère d'uréthane selon la revendication 4.
